# EUROPÄISCHE PATENTANMELDUNG

(11) **EP 4 541 198 A1**
(43) Veröffentlichungstag der Anmeldung: **23.04.2025**
(21) Anmeldenummer: 23204854.6
(22) Anmeldetag: 20.10.2023
(51) Int. Cl.: A22C 5/00, A22C 11/02, F04C 2/344, A22C 11/08

(54) **FÜLLMASCHINE UND VERFAHREN ZUM ABFÜLLEN VON LEBENSMITTELN UND ZUM ANPASSEN DES DRUCKS IN EINEM KOMPRESSIONSBEREICH EINER PUMPE**

(71) Anmelder: Albert Handtmann Maschinenfabrik GmbH & Co. KG, 88400 Biberach (DE)
(72) Erfinder: Staudenrausch, Martin, 88400 Biberach (DE); Nusser, Marcel, 88471 Laupheim (DE)
(74) Vertreter: Grünecker Patent- und Rechtsanwälte PartG mbB

(57) **Zusammenfassung**

Die Erfindung betrifft eine Füllmaschine zum Abfüllen von Füllgut insbesondere Lebensmitteln mit einer Pumpe, die einen Einlassbereich 9, einen Kompressionsbereich 11 und einen Auslassbereich 17 aufweist, wobei die Füllmaschine weiter einen ersten Drucksensor zum Messen eines Drucks im Kompressionsbereich aufweist und eine Einstelleinrichtung 40 zum Einstellen von unterschiedlichen Drücken im Kompressionsbereich. Die Erfindung betrifft auch ein Verfahren zum Abfüllen von Füllgut mit einer entsprechenden Füllmaschine.

## Beschreibung

Die Erfindung betrifft eine Füllmaschine und ein Verfahren zum Abfüllen von Lebensmitteln und zum Anpassen des Drucks in einem Kompressionsbereich einer Pumpe gemäß den Oberbegriffen der Ansprüche 1 und 12.

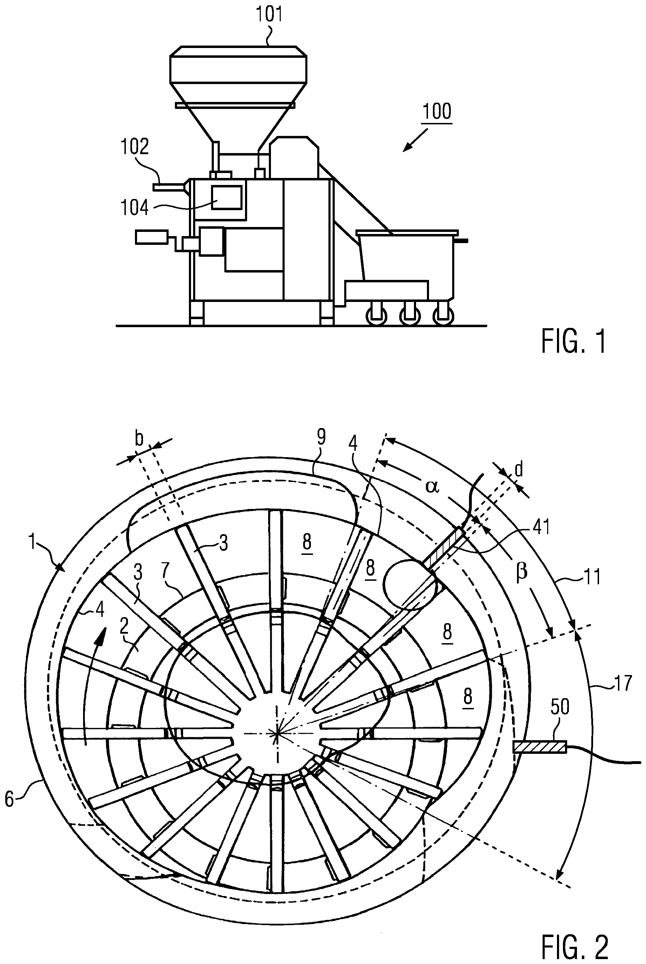

Füllmaschinen dienen dazu Füllgut, insbesondere Lebensmittel, abzufüllen. Dabei wird, wie zum Beispiel aus Figur 1 hervorgeht, Lebensmittel, zum Beispiel Wurstbrät oder eine pastöse Masse für ein vegetarisches oder veganes Produkt in einen Trichter 101 gefüllt und über ein Förderwerk durch das Füllrohr 102 ausgestoßen. Bei der Herstellung von portionierten Lebensmitteln, wie z.B. von Würsten ist einerseits die Beschaffenheit und Konsistenz sowie andererseits die Portionsgenauigkeit von großer Bedeutung. Somit ist es wichtig, dass ein konstanter Strom des Füllguts erzeugt wird und auch der Füllgutstrang eine möglichst konstante Dichte aufweist, sodass Einzelportionen mit identischem Gewicht und identischer Beschaffenheit und Konsistenz erzeugt werden können.

Neben der ordnungsgemäßen Befüllung beispielsweise der Förderkammern einer Pumpe ist es ebenfalls wichtig, eine Pulsation des Füllgutausstoßes zu verhindern, wie beispielsweise in der EP0718497B1, EP0583721 B1 und auch in der EP2532244 A1 beschrieben ist. Diese Pulsation rührt von einem Druckunterschied zwischen Auslass und der sich öffnenden Förderkammer der Pumpe, also einem Druckunterschied zwischen dem Kompressionsbereich einer Pumpe und einem Auslassbereich.

Es können unterschiedliche Drücke im Auslass der Pumpe herrschen, die maßgeblich bestimmt sind durch die Art des Produkts (Viskosität, Stückigkeit, Kohäsion, Kompressibilität etc.), Füllgeschwindigkeit der Pumpe, angeschlossenes Prozessequipment an der Pumpe, welches einen Druckverlust zur Folge hat. Dies können zum Beispiel Rohre, Umlenkungen, Füllstromteiler etc. sein. Dieses Prozessequipment kann nicht von der Füllmaschine erfasst werden, sodass der Maschinensteuerung hierzu keine Information vorliegt und entsprechende den Druck beeinflussende Parameter nicht berücksichtigt werden können.

Wird der Druck im Kompressionsbereich, zum Beispiel in den Förderkammern so gewählt, dass dieser dem Druck im Auslassbereich der Pumpe entspricht, so stellt sich ein ideales Druckgleichgewicht ein und eine Pulsation kann wirksam verhindert werden. Bei Druckunterschieden zwischen Kompressionsbereich und Auslassbereich der Pumpe entsteht beim Öffnen der unter Druck stehenden Förderkammern in den Auslassbereich ein schlagartiges Rückströmen (P _{Kom-pression} < P _{Auslass}) oder Vorwärtsströmen (P _{Kompression} > P _{Auslass}) im Auslassbereich der Pumpe.

Es gibt bereits Versuche, die Pulsation wirksam zu minimieren. Eine Pumpe zum Fördern von Füllgut, zum Beispiel fließfähige, pastöse oder stückige Lebensmittelmassen, zum Beispiel eine Flügelzellenpumpe weist einen Einlassbereich auf, in den beispielsweise von dem in Figur 1 gezeigten Trichter das Füllgut in die Pumpe gelangt, einen Kompressionsbereich bei dem in der Förderkammer das Volumen in Drehrichtung bzw. Bewegungsrichtung verkleinert wird und einen Auslassbereich. Der Kompressionsbereich befindet sich zwischen Einlassbereich und Auslassbereich. Es wurde bereits versucht den Kompressionsdruck im Kompressionsbereich, der auf ein kompressibles oder inkompressibles Medium wirkt zu begrenzen. Hierzu wird beispielsweise ein federbelastetes Überdruckventil, wie in der EP0718497 B1 beschrieben wird, mit einem Ausgleichskolben verwendet. Steigt der Druck über einen bestimmten Wert kann das überschüssige Produkt über das Überdruckventil beispielsweise in einen Rückführkanal, den der Ausgleichskolben im Fall einer Betätigung freigibt, in Richtung des Einlasses der Pumpe abgeführt werden. Somit kann der Druck nicht oder nur geringfügig weiter ansteigen. Zum Stand der Technik gehört auch die Gewichtskompensation mit Speicherzylinder ohne Rückführkanal wie zum Beispiel in der EP0583721 B1 beschrieben ist.

Dabei wird beispielsweise einmalig das Überdruckventil und folglich die Kompression an den Luftgehalt eines bestimmten Füllguts angepasst. Der Öffnungsdruck des Ausgleichkolbens des Überdruckventils wird also passend zu der gewünschten Schonung des Produkts, der Leckage im Förderwerk und dem Druck im Auslass der Pumpe gewählt. Der Kompressionsdruck im Stand der Technik ist also auf einen bestimmten Wert eingestellt, d. h. statisch festgelegt und wird bestimmt durch den Einsatz einer Feder mit einer bestimmten Federkonstante/Federkennlinie und der durch den Einbauraum geometrisch bestimmten Vorspannung. Dabei wird die Vorrichtung derart ausgelegt, dass beim Überschreiten des Öffnungsdrucks das überschüssige Füllgut z.B. über einen Bypasskanal in die nachfolgende Förderkammer im Zuflussbereich zurückgeführt werden kann.

Wie aus der Figur 1 hervorgeht, wird beispielsweise das Füllgut in Brätwagen angeliefert und in den Trichter 101 eingefüllt. Dabei kommt es vor, dass sich unterschiedliche Chargen unterscheiden, d. h. eine unterschiedliche Kompressibilität, Stückigkeit, einen unterschiedlichen Luftgehalt etc. aufweisen.

Der für Salamibrät eingestellte Druck im Kompressionsbereich ist z. B unpassend für Weißwurstbrät oder pastöser Masse für ein veganes Produkt. Aber auch bei ein und demselben Füllgut kann es chargenbedingt zu Schwankungen der Kompressibilität kommen und somit einerseits zu Qualitätsproblemen, aber auch zu Gewichtsschwankungen.

Das auf einen festen Öffnungsdrück des Überdruckventils eingestellte System kann auf solche Änderungen nicht reagieren.

Durch die unterschiedliche Kompressibilität kommt es darüber hinaus z.B. zu einem Druckunterschied zwischen Kompressionsbereich und Auslassbereich, was eine Pulsation mit sich bringt und somit zu Gewichtsschwankungen im Füllgutstrang und folglich zu einer schlechten Gewichtsgenauigkeit der einzelnen Portionen, z.B. Würsten, kommt. Gemäß der Fertigpackungsverordnung (FPackV) darf das auf einer Fertigpackung angegebene Gewicht nur in geringem Umfang unterschritten werden, sodass derart produziert wird, dass das Gewicht bzw. die Masse der Portion sicherheitshalber um einen bestimmten Betrag z.B. 1 g über dem angegebenen Gewicht liegt, damit z.B. Schwankungen in der Kompressibilität nicht dazu führen, dass das angegebene Gewicht unterschritten wird. Dies führt zu einem enormen Verlust an Füllgut. Bei einer Produktion von 200.000 Portionen mit einem Gesamtgewicht von 10 t pro Tag liegt der Verlust in einem Bereich von 200 kg, was einen enormen wirtschaftlichen Schaden darstellt.

Im Stand der Technik wurde bei unterschiedlichen Füllgütern entweder ein anderes Überdruckventil eingebaut werden oder aber eine manuelle mechanische Einstellung vorgenommen, was einen Maschinenstillstand notwendig macht. Schwankungen während des Prozesses können damit nicht ausgeglichen werden. Darüber hinaus ist eine exakte Einstellung bzw. Anpassung der Drücke im Kompressionsbereich und Auslassbereich nicht möglich. Ein kontinuierlicher in dieser Hinsicht zuverlässiger Betrieb ist nicht möglich.

Hiervon ausgehend liegt der vorliegenden Erfindung die Aufgabe zugrunde, eine Füllmaschine sowie ein entsprechendes Verfahren bereitzustellen, die ein verbessertes kontinuierliches Abfüllen von in der Kompressibilität schwankendem Füllgut ermöglichen.

Erfindungsgemäß wird diese Aufgabe durch die Merkmale der Ansprüche 1 und 12 gelöst.

Die erfindungsgemäße Füllmaschine zum Abfüllen von Füllgut, insbesondere Lebensmittel weist eine Pumpe auf, die einen Einlassbereich, einen Kompressionsbereich und ein Auslassbereich aufweist. Dabei ist der Kompressionsbereich getrennt zwischen Einlassbereich und Auslassbereich angeordnet. Die Füllmaschine ist insbesondere ausgelegt pastöse Massen abzufüllen, insbesondere kompressible Medien wie zum Beispiel Wurstbrät, pastöse Massen für vegane Produkte etc. aber auch Teige. Im Kompressionsbereich wird das über den Einlassbereich zugeführte Füllgut durch Förderelemente in Richtung Auslassbereich transportiert und komprimiert und über einen Auslassbereich aus der Pumpe ausgeschoben, zum Beispiel in ein Füllrohr zur Herstellung von Würsten.

Erfindungsgemäß weist die Füllmaschine einen ersten Drucksensor auf, zum Messen eines Drucks im Kompressionsbereich, z.B. in der mindestens einer Förderkammer. Somit kann der Druck im Kompressionsbereich erfasst werden. Dabei ist der Sensor vorzugsweise derart angeordnet, dass er einen Druck misst, der im Wesentlichen dem Druck in der Förderkammer entspricht, bevor diese sich im Auslassbereich öffnet. Dabei kann der Kompressionsbereich einen ersten Bereich umfassen, in dem das Volumen des Füllguts komprimiert wird, sodass sich ein entsprechender Druck einstellt und einen nachfolgenden Bereich umfassen (z.B nachfolgend in Drehrichtung bei Flügelzellenpumpen bzw. in Transportrichtung bei Schneckenpumpen) in dem keine weitere Kompression erfolgt, sondern der Druck im Wesentlichen aufrechterhalten wird. Dabei kann der Druck im Kompressionsbereich z.B. gleich oder größer als der Druck im Auslaßbereich eingestellt werden. Wird der Druck im Kompressionsbereich, wie beschrieben höher eingestellt, kann z.B. ein Druckabfall durch Leckage kompensiert werden.

Unter Drucksensor, bzw. Aufnehmer oder Fühler versteht man also eine Einrichtung zum Erfassen des Drucks, wobei die erfasste Messgröße in ein entsprechendes elektrisches Signal umgeformt wird. Als Drucksensor können beispielsweise folgende Einrichtungen verwendet werden Piezoresistiver Sensor, Drucksensoren auf Dehnmessstreifen-Basis, induktive oder kapazitive Drucksensoren, etc.

Der Sensor kann auch beispielsweise in der Einstelleinrichtung integriert sein. Die Erfassung des Drucks bzw. die Erfassung der Druckänderung kann dann über einen Antrieb, insbesondere Linearaktor bzw. Spindelantrieb durch steuerungstechnische Auswertung des Antriebsstroms bei der Bewegung bzw. des Haltestroms bei Stillstand z. B. eines Kolbens erfolgen. Mit zunehmendem Druck steigt dabei der Antriebsstrom. Damit kann ein separater Drucksensor eingespart werden. Der Sensor kann vorab entsprechend kalibriert werden.

Die vorliegende Erfindung weist weiter eine Einstelleinrichtung auf zum Einstellen von unterschiedlichen Drücken im Kompressionsbereich also während der Produktion ohne Maschinenstillstand und ohne Produktionsunterbrechung.

Somit kann der Druck im Kompressionsbereich kontinuierlich oder in Intervallen gemessen werden und kontinuierlich oder in Intervallen während der Produktion auf einen bestimmten Druckwert eingestellt werden, wobei dieser Druckwert veränderbar ist.. Im Gegensatz dazu ist im Stand der Technik, bei dem beispielsweise ein auf einen vorbestimmten Druck statisch eingestelltes Überdruckventil verwendet wird, keine Anpassung während der Produktion , insbesondere keine kontinuierliche Anpassung und kein kontinuierliches und dynamisches Einstellen unterschiedlicher Drücke während der Produktion möglich.

Es kann erfindungsgemäß schnell und einfach auf sich ändernde Prozessbedingungen und Schwankungen, wie einen unterschiedlichen Luftgehalt in Lebensmitteln und eine damit einhergehende unterschiedliche Kompressibilität reagiert werden, indem der Druck im Kompressionsbereich angepasst wird. Für unterschiedliche Füllgüter kann jeweils der Druck im Kompressionsbereich gemessen und auf einen passenden Wert eingestellt werden.

Es können definierte Bedingungen im Kompressionsbereich eingestellt werden, derart, dass auf sich ändernde Drücke im Auslassbereich reagiert werden kann um beispielsweise auch eine Pulsation zu verhindern. Durch den Drucksensor im Kompressionsbereich und die Einstelleinrichtung kann deswegen eine höhere Portionsgenauigkeit, d.h. Gewichtsgenauigkeit pro Portion und somit letztendlich auch eine wirtschaftlichere Produktion gewährleistet werden. Außerdem kann verhindert werden, dass das Füllgut durch einen zu hohen Druck im Kompressionsbereich mechanisch belastet wird, da der Druck einstellbar ist, insbesondere auch bei sich ändernden Füllgütern. Insbesondere kann jetzt bei unterschiedlichen Füllgütern abhängig vom Luftgehalt und der Produktart jeweils der maximal mögliche Druck eingestellt werden.

Der Druck kann durch die Einstelleinrichtung dynamisch eingestellt werden. Unter dynamischem Einstellen versteht man ein Einstellen von unterschiedlichen Drücken durch eine ansteuerbare Einstelleinrichtung, die eine entsprechende Bewegung ausführt.

Gemäß einer bevorzugten Ausführungsform weist die Füllmaschine im Auslassbereich einen zweiten Drucksensor auf, zum Messen eines Drucks im Auslassbereich. Wenn dieser Druck bekannt ist, kann der Druck im Kompressionsbereich durch die Einstelleinrichtung an den Druck im Auslassbereich angepasst werden,beispielsweise über einen Bediener oder aber insbesondere auch durch eine entsprechende Steuereinrichtung, die derart ausgebildet ist, dass sie den Druck im Kompressionsbereich in Abhängigkeit des im Auslassbereichs gemessenen Drucks regelt, wobei vorzugsweise der Druck im Kompressionsbereich die Regelgröße ist und der Druck im Auslassbereich die Führungsgröße.

Eine entsprechende Steuereinrichtung bringt den Vorteil mit sich, dass während der Produktion kontinuierlich und dynamisch der Druck im Kompressionsbereich zum Beispiel an den Druck im Auslassbereich angenähert werden kann, damit es keine Pulsation gibt, selbst dann, wenn es zu Schwankungen des Luftgehalts im Füllgut kommt oder ein Füllgutwechsel stattfindet. Der Bediener kann so stets von korrekten Druckverhältnissen ausgehen. Selbst wenn beispielsweise die Fördergeschwindigkeit, d.h. die Fördermenge pro Zeit der Pumpe geändert wird, stellen sich automatisch die richtigen Druckverhältnisse ein.

Der Druck im Kompressionsbereich ist auch hierbei vorzugsweise die Regelgröße und der Druck im Auslassbereich vorzugsweise die Führungsgröße.

Die Steuereinrichtung ist vorzugsweise derart ausgebildet, dass der Druck im Kompressionsbereich als Regelgröße X geregelt wird und der Istwert der von dem ersten gemessene Druck ist und der Sollwert der im Auslassbereich durch den zweiten Drucksensor gemessene Druck und das Stellglied die Einstelleinrichtung ist.

Gemäß einem bevorzugten Ausführungsbeispiel ist die Einstelleinrichtung als Druckbegrenzer ausgebildet und bei Überschreiten eines Solldrucks im Kompressionsbereich kann überschüssiges Volumen aus dem Kompressionsbereich, insbesondere einer Förderkammer abgeleitet werden, zum Beispiel über eine Ableitung zum Beispiel zurück zum Einlassbereich geleitet werden oder aber in einen Ausgleichszylinder geleitet werden, der das überschüssige Volumen aufnimmt und gegebenenfalls wieder zum Beispiel in eine nachfolgende (in Drehrichtung betrachtet) Förderkammer rückführen kann. Dabei wird so viel Volumen abgeleitet, dass sich der passende Druck, d.h. insbesondere der Solldruck einstellen kann.

Gemäß einer bevorzugten Ausführungsform ist der Solldruck im Kompressionsbereich dynamisch anpassbar, ist also variabel und muss also nicht konstant. Der Solldruck kann zum Beispiel dem Öffnungsdruck einer Einstelleinrichtung entsprechen, beispielsweise eines Überdruckventils, das bei einem bestimmten Druck öffnet. Dieser Öffnungsdruck ist also auch variabel, d.h., dynamisch einstellbar und kann sich während der Produktion ändern, was im Stand der Technik nicht möglich war.

Vorteilhafterweise ist die Einstelleinrichtung als Ventil ausgebildet. Das kann beispielsweise ein über die Steuereinrichtung ansteuerbares Ventil sein, das öffnet, wenn der gemessene Druck im Kompressionsbereich zu hoch ist und so viel Volumen abführt bis sich ein korrekter Druck einstellt und dann zum Beispiel wieder schließt. Gemäß einer besonderen Ausführungsform ist das Ventil ein Überdruckventil, das auf einfache Art und Weise in dem Kompressionsbereich integriert werden kann und das öffnet, wenn der Solldruck überschritten wird. Die Einstelleinrichtung kann auch einen Ausgleichszylinder mit Ausgleichskolben umfassen, wobei in den Ausgleichzylinder überschüssiges Volumen abgeleitet wird, wenn der Sollwert überschritten wird, wobei beispielsweise ein Ausgleichskolben so weit im Ausgleichszylinder zurück bewegt wird, bis ein entsprechendes Volumen abgeleitet wird um den entsprechenden Solldruck einzustellen.

Der Drucksensor im Kompressionsbereich steht in Verbindung zu einer Förderkammer der Pumpe, zum Beispiel einer Förderkammer einer Flügelzellenpumpe oder aber der Förderkammer d.h. der Förderschnecke einer Schneckenpumpe oder Doppelschneckenpumpe, in der sich das komprimierte Füllgut befindet.

Die Einstelleinrichtung ist vorzugsweise als Überdruckventil ausgebildet ist und weist z.B. eine über eine Einrichtung zur Erzeugung eines Gegendrucks vorgespannte Feder auf, wobei über die Einrichtung zur Erzeugung eines Gegendrucks (44,45,46) die Federspannung dynamisch einstellbar ist und somit der Solldruck bzw. Öffnungsdruck des Überdruckventils dynamisch einstellbar ist
Somit kann der Öffnungsdruck auf den Solldruck eingestellt werden, was eine besonders einfache Regelung ermöglicht.

Die Einrichtung zur Erzeugung des Gegendrucks erzeugt gemäß einer weiteren Ausführungsform einen Gegendruck auf den Ausgleichskolben, damit so viel überschüssiges Füllgutvolumen abgeführt werden kann, dass sich der Solldruck einstellt.

Der erste Drucksensor steht vorzugsweise in Verbindung mit einer Förderkammer einer Pumpe.

Die Pumpe ist vorzugsweise eine Pumpe aus folgender Gruppe: Flügelzellenpumpe, Schneckenpumpe etc.. Diese Pumpen sind besonders geeignet für Füllmaschinen. Grundsätzlich eignet sich die vorliegende Erfindung jedoch auch für Zahnradpumpen, Kolbenpumpen, Klauenpumpen, etc..

Wenn die Pumpe eine Flügelzellenpumpe oder eine Schneckenpumpe ist, ist es vorteilhaft, wenn der Drucksensor einen kleineren Durchmesser hat als die Breite der Förderelemente z.B. der Flügel der Flügelzellenpumpe oder der Schneckenwindung. Unter Breite der Flügel der Flügelzellenpumpe versteht man die Abmessung der Außenseite eines Flügels, die an der Innenkontur der Pumpe anliegt. Unter Breite der Schneckenwindung versteht man ebenfalls die Breite einer Schneckenwindung der Seite an dem die Windung am Gehäuse anliegt. Es ist auch möglich, dass der Sensor über eine Öffnung, z.B. einen Spalt mit der Förderkammer in Verbindung steht, dann hat die Öffnung, bzw. der Spalt eine Breite die kleiner ist als die Breite des Förderelements. Somit kann sichergestellt werden, dass der Druck in einer Kammer gemessen wird und nicht in hintereinander laufenden Kammern.

Die Erfindung betrifft ebenfalls ein Verfahren zum Abfüllen von Füllgut mit einer Füllmaschine, insbesondere einer Füllmaschine nach mindestens einem der Ansprüche 1 bis 11, wobei Füllgut in einen Einlassbereich der Pumpe eingebracht wird, in einem Kompressionsbereich komprimiert und einem Auslassbereich ausgestoßen wird, wobei der Druck im Kompressionsbereich während des Abfüllens angepasst wird durch: Messen des Drucks im Kompressionsbereich mit einem ersten Sensor und kontinuierlichem Einstellen des Drucks in dem Kompressionsbereich über eine Einstelleinrichtung. Somit ergibt sich, wie eingangs diskutiert, die Möglichkeit einer gezielten Einstellung und Anpassung des Drucks im Kompressionsbereichs an unterschiedliche Prozessbedingungen. Der Druck im Kompressionsbereich kann insbesondere kontinuierlich angepasst werden.

Insbesondere wird der Druck im Kompressionsbereich geregelt. Ein Regeln über eine Steuereinrichtung, d.h. Maschinensteuerung war so im Stand der Technik nicht möglich.

Vorteilhafterweise wird gemäß dem erfindungsgemäßen Verfahren über einen zweiten Drucksensor ein Druck im Auslassbereich der Pumpe gemessen und der Druck im Kompressionsbereich geregelt, wobei der Druck im Kompressionsbereich die Regelgröße ist und der Druck im Auslassbereich die Führungsgröße.

Gemäß einer bevorzugten Ausführungsform ist der Istwert der vom ersten Sensor gemessene Druck und der Sollwert der im Auslassbereich durch den zweiten Drucksensor gemessene Druck und die Einstelleinrichtung ist ein entsprechendes Stellglied und regelt den Druck im Kompressionsbereich, sodass er vorzugsweise dem Druck im Auslassbereich entspricht.

Vorzugsweise sind der Druck im Kompressionsbereich und der Druck im Auslassbereich im Moment des Öffnens der Kammer gleich. Es kann aber auch vorkommen, dass nur eine Annäherung mit einer Abweichung von beispielsweise bis zu +/- 10 % möglich ist, z.B. aufgrund von Leckage.- Die Regelung kann auch bereits mit einer entsprechenden Abweichung erfolgen , d.h. der Sollwert ist dann um einen Betrag höher als der vom zweiten Drucksensor gemessene Druck ist - z.B. um 0,1% -20%Dieser Betrag kann z.B. in der Steuereinrichtung eingestellt werden.

Die Annährung kann also mit einer Abweichung behaftet sein, d.h. je dünnflüssiger das Produkt ist, desto höher sollte der Solldruck gewählt werden, da noch Leckage wahrscheinlich ist.

Gemäß einer bevorzugten Ausführungsform kann bei dem erfindungsgemäßen Verfahren in der Füllmaschine ein erstes Füllgut, insbesondere Lebensmittel mit einer ersten Kompressibilität abgefüllt werden mit einem ersten Druck im Auslassbereich und einem über die Einstelleinrichtung entsprechend angepassten ersten Druck im Kompressionsbereich wonach ein zweites Füllgut, insbesondere Lebensmittel mit einer zweiten Kompressibilität abgefüllt wird, wobei über die Einstelleinrichtung der Druck im Kompressionsbereich an den im Auslassbereich gemessenen zweiten Druck angepasst wird. Somit kann während des Abfüllprozesses ein passendes Druckverhältnis sichergestellt werden. Das erste und zweite Füllgut kann das gleiche Füllgut, jedoch mit schwankender bzw. unterschiedlicher Zusammensetzung sein, wie beispielsweise einem unterschiedlichen Luftgehalt oder einer unterschiedlichen Stückigkeit. Das erste und zweite Füllgut können aber auch unterschiedliche Füllgüter sein, wie einerseits Weißwurstbrät und andererseits Salamimasse. Die vorliegende Erfindung wird nachfolgend unter Bezugnahme folgender Figuren näher erläutert.
- **Figur 1**: zeigt schematisch eine Seitenansicht einer Füllmaschine gemäß einem Ausführungsbeispiel der vorliegenden Erfindung.
- **Figur 2**: zeigt schematisch einen Querschnitt durch eine Flügelzellenpumpe der vorliegenden Erfindung.
- **Figur 3**: zeigt schematisch einen Längsschnitt durch die in Figur 2 gezeigte Pumpe.
- **Figur 4**: zeigt einen weiteren Längsschnitt durch ein weiteres Ausführungsbeispiel mit einer Schneckenpumpe gemäß der vorliegenden Erfindung.
- **Figur 5**: zeigt einen Regelkreis gemäß einem Ausführungsbeispiel der vorliegenden Erfindung.
- **Figur 6**: zeigt eine schematische Darstellung einer weiteren Ausführungsform mit einem Ausgleichszylinder als Einstelleinrichtung.

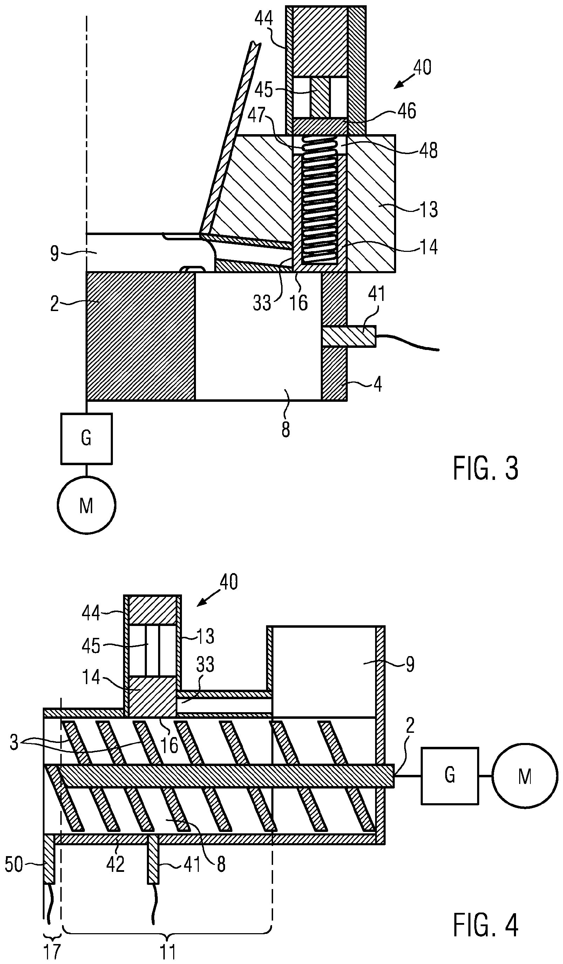

Figur 1 zeigt schematisch eine Füllmaschine 100 gemäß einem Ausführungsbeispiel der vorliegenden Erfindung. Eine solche Füllmaschine 100 weist zum Beispiel einen Trichter 101 auf, in den Füllgut, insbesondere Lebensmittel wie Wurstbrät, pastöse Massen etc. eingefüllt werden können. Dieser Trichter steht mit einer Pumpe 1, hier zum Beispiel der in den Figuren 2 und 3 gezeigten Flügelzellenpumpe 1 oder der in Fig 4 gezeigten Schneckenpumpe in Verbindung und fördert das Füllgut z.B. in ein Füllrohr 102 bzw. eine Abdrehtülle, um beispielsweise, wie allgemein bekannt ist, Würste herzustellen. Figur 1 zeigt weiter einen Brätwagen und eine Hubeinrichtung, über die das Füllgut in den Trichter 101 eingefüllt werden kann. Weiter weist die vorliegende Erfindung eine Steuereinrichtung 104 auf, d. h. eine Maschinensteuerung.

Figur 2 zeigt einen Querschnitt durch eine mögliche Ausführungsform einer Pumpe 1, hier einer Flügelzellenpumpe. Wie insbesondere aus Figur 2 hervorgeht, umfasst die Flügelzellenpumpe 1 ein Pumpengehäuse 6 und einen darin exzentrisch angeordneten, in Drehung versetzbaren Rotor 2 und in diesem radial verschiebbar gelagerte Flügel 3, die mit der Pumpenwandung 4 des Pumpengehäuses 1, dem Boden und dem Deckel des Pumpengehaüses und der Außenfläche 7 des Rotors 2 Förderzellen 8 bilden und im abdichtenden Sinn zusammenwirken, wobei das Pumpengehäuse 6 einen Einlassbereich 9 und einen Auslassbereich 17 aufweist. Zwischen dem Einlassbereich 9 und den Auslassbereich 17 befindet sich ein Kompressionsbereich 11. Im Einlassbereich 9 werden die Förderkammern 8 vollständig mit dem Füllgut befüllt. Im Kompressionsbereich 11 der Pumpe wird das Volumen der Förderkammer 8 reduziert. Dadurch erhöht sich der Innendruck in der Förderkammer 8. Dieser Anstieg ist abhängig von der Kompressibilität des Füllguts. Der Kompressionsbereich 11 kann neben einem in Drehrichtung der Pumpe ersten Sektor in einem Winkelbereich α in dem das Volumen der Förderkammern abnimmt einen nachfolgenden Sektor in einem sich anschließenden Winkelbereich β aufweisen, in dem das Volumen der Förderkammer 8 im Wesentlichen gleichbleibt und somit auch der Druck im Wesentlichen gleichbleibt, wie insbesondere aus Figur 2 hervorgeht.

Im Kompressionsbereich 11 ist zum Beispiel im Deckel des Pumpengehäuses 6 eine Einstelleinrichtung 40, wie aus Figur 3 hervorgeht, vorgesehen. Die Einstelleinrichtung 40 ist hier in Form eines Überdruckventils ausgebildet mit einem Ausgleichszylinder 13 und einem Ausgleichskolben 14, mit einer Feder 47. Eine Einrichtung zur Erzeugung eines Gegendrucks 45,44,46 spannt die Feder 47 vor, d. h., dass der Einbauraum 48 der Feder 47 kürzer ist als die nicht vorgespannte Feder, so dass ein definierter Öffnungsdruck eingestellt wird (zum Beispiel 1,5 bis 20 bar). Durch das Stellglied 45, 46, kann der Einbauraum 48 in der Länge eingestellt werden und somit auch die Vorspannkraft, die von der Federkennlinie der eingesetzten Feder abhängt. Steigt im Kompressionsbereich der Druck nimmt auch die Kraft auf die Kontaktfläche 16 des Ausgleichszylinders 14 zu. Wird die Vorspannkraft, von der durch den Innendruck der Förderkammer 8 wirkenden Kraft überschritten, d. h. steigt der Druck in der Förderkammer 8 auf einen Druck der größer als der Öffnungsdruck ist, hebt sich der Ausgleichskolben 14 und ein überschüssiges Volumen an Füllgut kann abgeführt werden, insbesondere über die Ableitung 33 und erneut, wie in Figur 3 dargestellt ist, z.B. dem Einlassbereich 9 zugeführt werden. Somit kann der Druck in der Förderkammer 8 auf den Öffnungsdruck des Überdruckventils 20 eingestellt werden. Die Einstellung der Vorspannkraft kann also durch die Einrichtung zum Erzeugen einer Gegenkraft, die aus dem Teller 46 der Spindel 45 und dem Antrieb 44 besteht, bewirkt werden.

Gemäß der vorliegenden Erfindung ist die Einstelleinrichtung 40, hier also z.B. der Motor 44 mit der Steuereinrichtung 104 verbunden. Gemäß der Erfindung wird der Öffnungsdruck des Ausgleichskolbens 14 dynamisch veränderlich. Es kann also gezielt Einfluss auf diesen genommen werden. Eine Ansteuerung der Einstelleinrichtung kann auch pneumatisch oder hydraulisch erfolgen.

Die Einstelleinrichtung wirkt hier also als Druckbegrenzer.

Gemäß der vorliegenden Erfindung umfasst die Pumpe 1 einen ersten Drucksensor 41, der in der Pumpenwandung 4 angeordnet ist und den Druck im Kompressionsbereich 11 messen kann.Der Druckensor 41 kann also entweder bündig in der Pumpenwandung 4 des Pumpengehäuses 6 oder insbesondere bündig im Boden des Pumpengehäuses 6 oder im Deckel integriert sein oder aber über eine Öffnung mit einer Förderkammer 8 im Kompressionsbereich verbunden sein. Der Drucksensor 41kann aber auch in der Einstelleirichtung, d.h. hier in einer Einrichtung zum Erzeugen eines Gegendrucks auf eine Feder 47 oder einen Ausgleichskolben 14, insbesondere im entsprechenden Antrieb ( z.B. Linearantrieb bzw. Spindelantrieb - nicht dargestellt) integriert werden. Damit spart man ein Bauteil.Wesentlich ist lediglich, dass der Druck im Kompressionsbereich 11 ermittelt wird. Der erste Drucksensor 41 ist mit der Steuerrichtung 104 verbunden. Je nach Zielsetzung kann der Druck im Kompressionsbereich auf einem bestimmten Niveau gehalten werden oder aber auch verändert werden. Soll der Druck in der Förderkammer 8 verändert werden kann dies beispielsweise derart erfolgen, dass der Öffnungsdruck des Überdruckventils 40 geändert wird, indem über die Einrichtung 44, 45, 46 die Vorspannung der Feder 47 entsprechend geändert wird. Der Öffnungsdruck wird dann auf den Solldruck in der Förderkammer 8 eingestellt. Somit kann auf einfache Art und Weise der Druck im Kompressionsbereich, d. h. in der entsprechenden Förderkammer 8 begrenzt, insbesondere geregelt werden. Dazu kann ein aktiver Antrieb, insbesondere der zuvor genannte Linearantrieb vorgesehen sein um die Vorspannung der Feder einzustellen. Ziel kann es sein, einen bestimmten Druck einzustellen, den maximalen Druck für ein bestimmtes Füllgut zu erzielen oder abhängig vom Luftgehalt und der Produktart unterschiedliche Drücke einzustellen oder den Druck im Kompressionsbereich auf den Druck im Auslassbereich 17 einzustellen. Dazu kann ein zweiter Drucksensor 50 vorgesehen sein, der den Druck im Auslassbereich 17 misst. Dieser Sensor 50 ist ebenfalls mit der Steuereinrichtung 104 verbunden. Der Sensor 50 ist hierbei vorzugsweise im Auslaufstutzen, in der Seitenwand oder im Boden des Auslassbereichs angeordnet.

Somit kann, wie nachfolgend näher erläutert wird, der Druck im Kompressionsbereich in Abhängigkeit des im Auslassbereich 17 gemessenen Drucks geregelt werden.

Das in der Figur 3 gezeigte Überdruckventil ist nur ein Beispiel für eine Einstelleinrichtung 40. Alternativ kann die Feder 47 entfallen und die Bewegung des Ausgleichskolbens 14 erfolgt druck- oder weggesteuert.

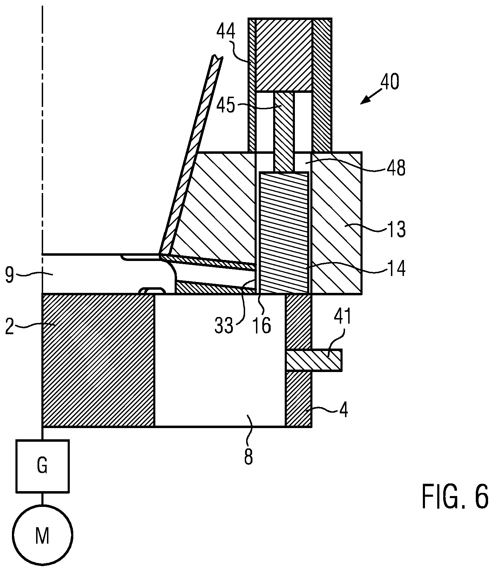

Eine weitere Ausführungsform für eine Einstelleinrichtung, ist in Figur 6 dargestellt, wobei dieses Ausführungsbeispiel im wesentlichen der in Fig. 3 gezeigten Ausführungsform entspricht mit der Ausnahme, dass hier die Einstelleirichtung kein Überdruckventil mit einer Feder aufweist Die Einstelleinrichtung weist einen Ausgleichszylinder 13 auf, wobei das überschüssige Volumen aus dem Kompressionsbereich in den Ausgleichszylinder geleitet werden kann um einen bestimmten Druck einzustellen oder zu regeln. In dem Ausgleichszylinder 13 ist z.B. ein druck- oder weggesteuerter Ausgleichskolben 14 angeordnet auf den z.B. eine Einrichtung zum Erzeugen eines Gegendruckseine Kraft ausübt um den Ausgleichskolben so im Ausgleichszylinder zu positionieren, dass eine überschüssige Menge an Füllgut abgeleitet werden kann, z.B. über die Ableitung 33. Dazu ist ein entsprechender Antrieb z.B. Linearantrieb, d.h. Motor 44 vorgesehen.

Alternativ zur Einstellung des Vorspannweges im Einbauraum 48 kann ein im Druck einstellbarer Raum gestaltet werden, welcher den Gegendruck auf den Ausgleichskolben steuerbar macht.

Die vorliegende Erfindung wurde im Zusammenhang mit einer Flügelzellenpumpe beschrieben. Gleichermaßen funktioniert das erfinderische Konzept auch für Schneckenpumpen und Doppelschneckenpumpen wie beispielsweise in Figur 4 dargestellt ist.

Die Schneckenpumpe weist ebenfalls einen Einlassbereich 9, einen Kompressionsbereich 11, in dem das Füllgut durch die Schneckenwindungen, d. h. die Förderelemente 3 komprimiert wird, und einen Auslassbereich 17, wo das Füllgut ausgestoßen wird. Auch hier befindet sich im Kompressionsbereich 11 ein erster Drucksensor 41 und im Auslassbereich 17 ein zweiter Sensor 50. Im Kompressionsbereich befindet sich genau wie beim vorherigen Ausführungsbeispiel die Einstelleinrichtung 40. Die Funktion, die Sensoren und die Einstelleinrichtung entsprechen den im vorherigen Ausführungsbeispiel detailliert erläuterten Elementen. Somit kann auch hier im Kompressionsbereich der Druck insbesondere in Abhängigkeit des im Auslassbereichs gemessenen Drucks eingestellt, insbesondere geregelt werden.

Vorteilhafterweise hat der Drucksensor 41 wie auch bei dem vorherigen Ausführungsbeispiel einen kleineren Durchmesser a als die Breite b der Förderelemente 3, insbesondere der Flügel 3 der Flügelzellenpumpe oder der Schneckenwindung. Alternativ ist wie auch bereits zuvor beschrieben der Drucksensor über eine Öffnung, z.B. einen Spalt, der schmäler ist als die Breite des Förderelements 3 , mit der Förderkammer 8 im Kompressionsbereich 11 verbunden.

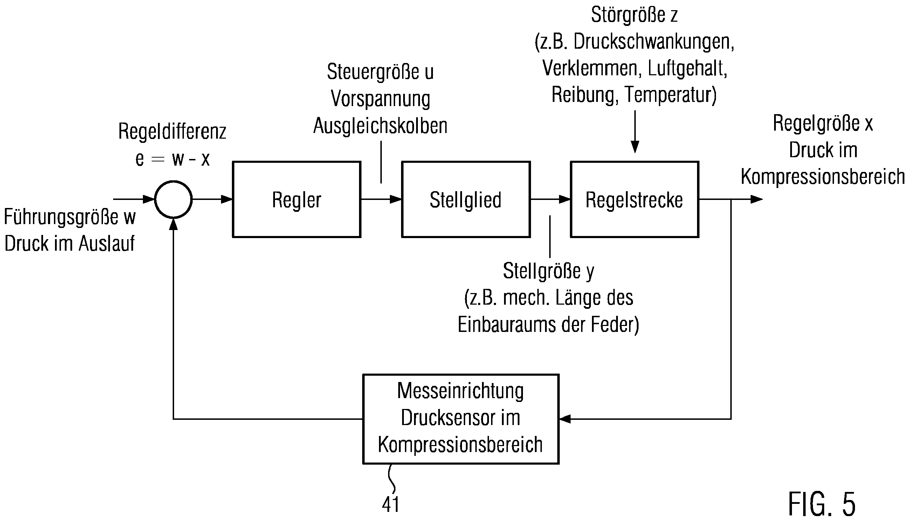

Das erfindungsgemäße Verfahren sowie die erfindungsgemäße Steuereinrichtung werden nachfolgend anhand der Figuren 1 bis 5 näher erläutert. Figur 5 zeigt einen Regelkreis eines möglichen Ausführungsbeispiels der vorliegenden Erfindung.

Zunächst wird, wie in Figur 1 dargestellt ist, Füllgut in einen Fülltrichter 101 eingefüllt und in den Einlassbereich 9 der Pumpe 1 geleitet. Dazu läuft die Pumpe mit einer Drehzahl bzw. fördert ein Volumen pro Zeit, so dass sich die Förderkammern 8 vollständig füllen. Das Füllgut gelangt in die Förderkammer 8 zwischen zwei Förderelemente 3 (siehe Figur 2 und 4), wobei im Kompressionsbereich das Füllgut komprimiert wird und im Auslassbereich 17 ausgestoßen wird. Der erste Drucksensor 41 misst den Druck im Kompressionsbereich 11, stellt hier also die in Fig 5 genannte Messeinrichtung dar.

Die Regelgröße x ist der Druck im Kompressionsbereich. Der Sensor 50 misst den Druck im Auslaufbereich 17. Der Druck im Auslaufbereich 17 stellt die Führungsgröße w dar. Der vom Drucksensor 50 gemessene Druck wird ebenfalls in den Regler geleitet. Und eine Regeldifferenz e = w - x wird ermittelt. In Abhängigkeit der Regeldifferenz wird die Einstelleinrichtung, also das Stellglied angesteuert, zum Beispiel der Motor 44 der Einstelleinrichtung 40 um eine entsprechende Steuergröße, zum Beispiel die Vorspannung des Ausgleichskolbens 14 bzw. den Öffnungsdruck einzustellen. Dabei ist die Stellgröße zum Beispiel hier die mechanische Länge des Einbauraums 48 für die Feder bzw. die resultierende Federspannung. Dabei gibt es in der Regelstrecke diverse Störgrößen z wie Druckschwankungen, Verklemmen, Reibung, Temperatur, etc. Der Sensor 41 misst den resultierenden Druck im Kompressionsbereich und leitet diesen Messwert wieder weiter an den Regler. Ändert sich jetzt beispielsweise das Füllgut, d. h., dass beispielsweise der Luftanteil höher wird und somit auch die Kompressibilität, so muss entsprechend nachgeregelt werden. Entsprechendes erfolgt kontinuierlich während des Prozesses.

Übersteigt der Ist- Druck im Kompressionsbereich den Sollwert, d.h. den Öffnungsdruck des Überdruckventils, so öffnet sich also das Überdruckventil und überschüssiges Füllgut wird abgeleitet.

Der Druck im Kompressionsbereich kann aber auch unabhängig vom gemessenen Druck im Auslassbereich auf einen bestimmten Wert mit der Einstelleinrichtung begrenzt, insbesondere geregelt werden.

## Patentansprüche

1. Füllmaschine (100) zum Abfüllen von Füllgut, insbesondere Lebensmitteln mit
einer Pumpe (1), die einen Einlassbereich (9), einen Kompressionsbereich (11) und einen Auslassbereich (17) aufweist
**gekennzeichnet durch**
einen ersten Drucksensor (41) zum Messen eines Drucks im Kompressionsbereich (11) und
eine Einstelleinrichtung (40) zum Einstellen von unterschiedlichen Drücken im Kompressionsbereich.

2. Füllmaschine (100) nach Anspruch 1, **dadurch gekennzeichnet, dass**
die Füllmaschine eine Steuereinrichtung (104) umfasst und die Einstelleinrichtung (40) durch die Steuereinrichtung (104) ansteuerbar ist und derart ausgebildet ist, dass sie den Druck im Kompressionsbereich dynamisch einstellen, insbesondere regeln kann.

3. Füllmaschine (100) nach Anspruch 1 oder 2, **dadurch gekennzeichnet, dass**
die Füllmaschine einen zweiten Drucksensor (50) aufweist zum Messen eines Drucks im Auslassbereich (17) und insbesondere eine Steuereinrichtung (104), die derart ausgebildet ist, dass sie den Druck im Kompressionsbereich (11) in Abhängigkeit des im Auslassbereich (17) gemessenen Drucks regelt, wobei vorzugsweise
der Druck im Kompressionsbereich die Regelgröße ist und der Druck im Auslassbereich (17) die Führungsgröße.

4. Füllmaschine nach Anspruch 3, **dadurch gekennzeichnet, dass**
die Steuereinrichtung (104) derart ausgebildet ist, dass der Druck im Kompressionsbereich (11) als Regelgröße (X) geregelt wird und
der Istwert der von dem ersten Drucksensor (41) gemessene Druck, der Sollwert der im Auslassbereich (17) durch den zweiten Drucksensor (50) gemessene Druck und das Stellglied die Einstelleinrichtung (40) ist.

5. Füllmaschine (100) nach mindestens einem der vorhergehenden Ansprüche, **dadurch gekennzeichnet, dass**
die Einstelleinrichtung (40) als Druckbegrenzer ausgebildet ist und bei Überschreiten eines Solldrucks im Kompressionsbereich (11) überschüssiges Volumen aus dem Kompressionsbereich, insbesondere aus einer Förderkammer ableiten kann, insbesondere über eine Ableitung oder in einen Ausgleichszylinder (13).

6. Füllmaschine (100) nach Anspruch 5, **dadurch gekennzeichnet, dass**
der Solldruck im Kompressionsbereich (11) variabel und dynamisch anpassbar ist und insbesondere dem Öffnungsdruck der Einstelleinrichtung (40) entspricht, wobei insbesondere der Öffnungsdruck der Einstelleinrichtung (40) variabel und dynamisch einstellbar ist.

7. Füllmaschine nach mindestens einem der vorhergehenden Ansprüche, **dadurch gekennzeichnet, dass**
die Einstelleinrichtung (40) mit dem Kompressionsbereich (11) in Fluidverbindung steht, insbesondere als Ventil (40) ausgebildet ist, vorzugsweise als Überdruckventil oder Stellventil oder einen Ausgleichszylinder mit Ausgleichskolben umfasst.

8. Füllmaschine nach mindestens Anspruch 7, **dadurch gekennzeichnet, dass**
die Einstelleinrichtung (40) als Überdruckventil ausgebildet ist und eine über eine Einrichtung zur Erzeugung eines Gegendrucks (44, 45, 46) vorgespannte Feder (47) aufweist, wobei über die Einrichtung zur Erzeugung eines Gegendrucks ( 44,45,46) die Federspannung dynamisch einstellbar ist und somit der Solldruck, insbesondere Öffnungsdruck des Überdruckventils (40) dynamisch einstellbar ist und/oder
die Einstelleinrichtung einen Ausgleichszylinder (13) umfasst, der einen Ausgleichskolben (14) aufweist, und das Volumen, das aus dem Kompressionsbereich in den Ausgleichszylinder (13) abgeleitet werden kann und somit der Solldruck über eine Einrichtung zum Erzeugen eines Gegendrucks (44, 25,46) auf den Ausgleichskolben einstellbar ist, wobei vorzugsweise die Einrichtung zum Erzeugen eines Gegendrucks einen Antrieb, vorzugsweise Linear- oder Spindelantrieb mit integriertem Drucksensor aufweist.

9. Füllmaschine nach mindestens einem der vorhergehenden Ansprüche, **dadurch gekennzeichnet, dass**
der erste Drucksensor (41) im Kompressionsbereich (11) in Verbindung steht mit einer Förderkammer (8) der Pumpe (1).

10. Füllmaschine nach mindestens einem der Ansprüche 1-9, **dadurch gekennzeichnet, dass** die Pumpe (1) vorzugsweise eine Flügelzellenpumpe oder Schneckenpumpe oder eine Doppelschneckenpumpe ist.

11. Füllmaschine nach mindestens einem der Ansprüche 1-10, **dadurch gekennzeichnet, dass** die Pumpe eine Flügelzellenpumpe oder eine Schneckenpumpe ist, wobei der Drucksensor einen kleineren Durchmesser (d) hat als eine Breite (b) von Förderelementen (3), insbesondere Flügel (3) der Flügelzellenpumpe oder der Schneckenwindung der Schneckenpumpe.

12. Verfahren zum Abfüllen von Füllgut mit einer Füllmaschine (100), insbesondere einer Füllmaschine nach mindestens einem der Ansprüche 1-11,
wobei Füllgut in einen Einlassbereich (9) der Pumpe eingebracht wird, in einem Kompressionsbereich (11) komprimiert und einem Auslassbereich (17) ausgestoßen wird, wobei der Druck im Kompressionsbereich (11) während des Abfüllens angepasst wird durch: Messen eines Drucks im Kompressionsbereich (11) mit einem ersten Drucksensor (41) und Einstellen eines Drucks in dem Kompressionsbereich über eine Einstelleinrichtung (40).

13. Verfahren nach Anspruch 12, **dadurch gekennzeichnet, dass** der Druck im Kompressionsbereich geregelt wird und insbesondere die Einstelleinrichtung (40) durch eine Steuereinrichtung (104) angesteuert wird und den Druck im Kompressionsbereich dynamisch einstellt.

14. Verfahren nach mindestens Anspruch 13, **dadurch gekennzeichnet, dass** über einen zweiten Drucksensor (50) der Druck im Auslassbereich der Pumpe (1) gemessen wird und wobei der Druck im Kompressionsbereich (11) die Regelgröße und der Druck im Auslaufbereich die Führungsgröße ist und insbesondere
der Istwert der von dem ersten Drucksensor (41) gemessene Druck ist und der Sollwert der im Auslassbereich (17) durch den zweiten Drucksensor (50) gemessene Druck ist und die Einstelleinrichtung (40) als Stellglied den Druck im Kompressionsbereich so regelt dass er vorzugsweise dem Druck im Auslassbereich entspricht oder
der Istwert der von dem ersten Drucksensor (41) gemessene Druck ist und der Sollwert um einen Betrag größer ist als der im Auslassbereich (17) durch den zweiten Drucksensor (50) gemessene Druck ist und die Einstelleinrichtung (40) als Stellglied den Druck im Kompressionsbereich regelt.

15. Verfahren nach mindestens einen der Ansprüche 12-14 oder 17, **dadurch gekennzeichnet, dass**
in der Füllmaschine (100) ein erstes Füllgut, insbesondere erstes Lebensmittel mit einer ersten Kompressibilität abgefüllt wird, mit einem ersten Druck im Auslassbereich (17) und einem über die Einstelleinrichtung (40) entsprechend angepassten ersten Druck und Kompressionsbereich (11) wonach
ein zweites Füllgut, insbesondere zweites Lebensmittel mit einer zweiten Kompressibilität abgefüllt wird, wobei über die Einstelleinrichtung der Druck im Kompressionsbereich (11) an den im Auslassbereich (17) gemessenen zweiten Druck angepasst wird.

16. Verfahren nach mindestens einem der Ansprüche 12 -15, **dadurch gekennzeichnet, dass** der Druck im Kompressionsbereich (11) gleich oder größer, insbesondere um 0.1 - 20% als der Druck im Auslaßbereich (17) eingestellt, insbesondere geregelt wird.

17. Füllmaschine nach mindestens einem der Ansprüche 1-11, **dadurch gekennzeichnet, dass** der Drucksensor (41)
entweder bündig in der Pumpenwandung (4) des Pumpengehäuses (6) oder insbesondere bündig, im Boden des Pumpengehäuses (6) oder im Deckel integriert ist oder aber über eine Öffnung mit einer Förderkammer (8) im Kompressionsbereich verbunden ist oder
in die Einstelleinrichtung (40), insbesondere im entsprechenden Antrieb (33) einer Einrichtung zum Erzeugen eines Gegendrucks auf eine Feder (47) oder einen Ausgleichskolben, integriert ist.

## Geänderte Patentansprüche

### Geänderte Patentansprüche gemäss Regel 137(2) EPÜ.

1. Füllmaschine (100) zum Abfüllen von Füllgut, insbesondere Lebensmitteln mit einer Pumpe (1), die einen Einlassbereich (9), einen Kompressionsbereich (11) und einen Auslassbereich (17) aufweist, die
einen ersten Drucksensor (41) zum Messen eines Drucks im Kompressionsbereich (11) und eine Einstelleinrichtung (40) zum Einstellen von unterschiedlichen Drücken im Kompressionsbereich umfasst
wobei die Füllmaschine (100) derart ausgebildet ist, dass in der Füllmaschine ein erstes Füllgut, insbesondere erstes Lebensmittel mit einer ersten Kompressibilität abfüllbar ist, mit einem ersten Druck im Auslassbereich (17) und einem über die Einstelleinrichtung (40) entsprechend angepassten ersten Druck im Kompressionsbereich (11) wonach ein zweites Füllgut, insbesondere zweites Lebensmittel mit einer zweiten Kompressibilität abfüllbar ist, wobei über die Einstelleinrichtung der Druck im Kompressionsbereich (11) an den im Auslassbereich (17) gemessenen zweiten Druck angepasst werden kann.

2. Füllmaschine (100) nach Anspruch 1, **dadurch gekennzeichnet, dass**
die Füllmaschine eine Steuereinrichtung (104) umfasst und die Einstelleinrichtung (40) durch die Steuereinrichtung (104) ansteuerbar ist und derart ausgebildet ist, dass sie den Druck im Kompressionsbereich dynamisch einstellen, insbesondere regeln kann.

3. Füllmaschine (100) nach Anspruch 1 oder 2, **dadurch gekennzeichnet, dass**
die Füllmaschine einen zweiten Drucksensor (50) aufweist zum Messen eines Drucks im Auslassbereich (17) und insbesondere eine Steuereinrichtung (104), die derart ausgebildet ist, dass sie den Druck im Kompressionsbereich (11) in Abhängigkeit des im Auslassbereich (17) gemessenen Drucks regelt, wobei vorzugsweise
der Druck im Kompressionsbereich die Regelgröße ist und der Druck im Auslassbereich (17) die Führungsgröße.

4. Füllmaschine nach Anspruch 3, **dadurch gekennzeichnet, dass**
die Steuereinrichtung (104) derart ausgebildet ist, dass der Druck im Kompressionsbereich (11) als Regelgröße (X) geregelt wird und
der Istwert der von dem ersten Drucksensor (41) gemessene Druck, der Sollwert der im Auslassbereich (17) durch den zweiten Drucksensor (50) gemessene Druck und das Stellglied die Einstelleinrichtung (40) ist.

5. Füllmaschine (100) nach mindestens einem der vorhergehenden Ansprüche, **dadurch gekennzeichnet, dass**
die Einstelleinrichtung (40) als Druckbegrenzer ausgebildet ist und bei Überschreiten eines Solldrucks im Kompressionsbereich (11) überschüssiges Volumen aus dem Kompressionsbereich, insbesondere aus einer Förderkammer ableiten kann, insbesondere über eine Ableitung oder in einen Ausgleichszylinder (13).

6. Füllmaschine (100) nach Anspruch 5, **dadurch gekennzeichnet, dass**
der Solldruck im Kompressionsbereich (11) variabel und dynamisch anpassbar ist und insbesondere dem Öffnungsdruck der Einstelleinrichtung (40) entspricht, wobei insbesondere der Öffnungsdruck der Einstelleinrichtung (40) variabel und dynamisch einstellbar ist.

7. Füllmaschine nach mindestens einem der vorhergehenden Ansprüche, **dadurch gekennzeichnet, dass**
die Einstelleinrichtung (40) mit dem Kompressionsbereich (11) in Fluidverbindung steht, insbesondere als Ventil (40) ausgebildet ist, vorzugsweise als Überdruckventil oder Stellventil oder einen Ausgleichszylinder mit Ausgleichskolben umfasst.

8. Füllmaschine nach mindestens Anspruch 7, **dadurch gekennzeichnet, dass**
die Einstelleinrichtung (40) als Überdruckventil ausgebildet ist und eine über eine Einrichtung zur Erzeugung eines Gegendrucks (44, 45, 46) vorgespannte Feder (47) aufweist, wobei über die Einrichtung zur Erzeugung eines Gegendrucks ( 44,45,46) die Federspannung dynamisch einstellbar ist und somit der Solldruck, insbesondere Öffnungsdruck des Überdruckventils (40) dynamisch einstellbar ist und/oder
die Einstelleinrichtung einen Ausgleichszylinder (13) umfasst, der einen Ausgleichskolben (14) aufweist, und das Volumen, das aus dem Kompressionsbereich in den Ausgleichszylinder (13) abgeleitet werden kann und somit der Solldruck über eine Einrichtung zum Erzeugen eines Gegendrucks (44, 25,46) auf den Ausgleichskolben einstellbar ist, wobei vorzugsweise die Einrichtung zum Erzeugen eines Gegendrucks einen Antrieb, vorzugsweise Linear- oder Spindelantrieb mit integriertem Drucksensor aufweist.

9. Füllmaschine nach mindestens einem der vorhergehenden Ansprüche, **dadurch gekennzeichnet, dass**
der erste Drucksensor (41) im Kompressionsbereich (11) in Verbindung steht mit einer Förderkammer (8) der Pumpe (1).

10. Füllmaschine nach mindestens einem der Ansprüche 1-9, **dadurch gekennzeichnet, dass** die Pumpe (1) vorzugsweise eine Flügelzellenpumpe oder Schneckenpumpe oder eine Doppelschneckenpumpe ist.

11. Füllmaschine nach mindestens einem der Ansprüche 1-10, **dadurch gekennzeichnet, dass** die Pumpe eine Flügelzellenpumpe oder eine Schneckenpumpe ist, wobei der Drucksensor einen kleineren Durchmesser (d) hat als eine Breite (b) von Förderelementen (3), insbesondere Flügel (3) der Flügelzellenpumpe oder der Schneckenwindung der Schneckenpumpe.

12. Verfahren zum Abfüllen von Füllgut mit einer Füllmaschine (100), insbesondere einer Füllmaschine nach mindestens einem der Ansprüche 1-11,
wobei Füllgut in einen Einlassbereich (9) der Pumpe eingebracht wird, in einem Kompressionsbereich (11) komprimiert und einem Auslassbereich (17) ausgestoßen wird, wobei der Druck im Kompressionsbereich (11) während des Abfüllens angepasst wird durch: Messen eines Drucks im Kompressionsbereich (11) mit einem ersten Drucksensor (41) und Einstellen eines Drucks in dem Kompressionsbereich über eine Einstelleinrichtung (40),und wobei
in der Füllmaschine (100) ein erstes Füllgut, insbesondere erstes Lebensmittel mit einer ersten Kompressibilität abgefüllt wird, mit einem ersten Druck im Auslassbereich (17) und einem über die Einstelleinrichtung (40) entsprechend angepassten ersten Druck im Kompressionsbereich (11) wonach
ein zweites Füllgut, insbesondere zweites Lebensmittel mit einer zweiten Kompressibilität abgefüllt wird, wobei über die Einstelleinrichtung der Druck im Kompressionsbereich (11) an den im Auslassbereich (17) gemessenen zweiten Druck angepasst wird.

13. Verfahren nach Anspruch 12, **dadurch gekennzeichnet, dass** der Druck im Kompressionsbereich geregelt wird und insbesondere die Einstelleinrichtung (40) durch eine Steuereinrichtung (104) angesteuert wird und den Druck im Kompressionsbereich dynamisch einstellt.

14. Verfahren nach mindestens Anspruch 13, **dadurch gekennzeichnet, dass** über einen zweiten Drucksensor (50) der Druck im Auslassbereich der Pumpe (1) gemessen wird und wobei der Druck im Kompressionsbereich (11) die Regelgröße und der Druck im Auslaufbereich die Führungsgröße ist und insbesondere
der Istwert der von dem ersten Drucksensor (41) gemessene Druck ist und der Sollwert der im Auslassbereich (17) durch den zweiten Drucksensor (50) gemessene Druck ist und die Einstelleinrichtung (40) als Stellglied den Druck im Kompressionsbereich so regelt dass er vorzugsweise dem Druck im Auslassbereich entspricht oder
der Istwert der von dem ersten Drucksensor (41) gemessene Druck ist und der Sollwert um einen Betrag größer ist als der im Auslassbereich (17) durch den zweiten Drucksensor (50) gemessene Druck ist und die Einstelleinrichtung (40) als Stellglied den Druck im Kompressionsbereich regelt.

15. Verfahren nach mindestens einem der Ansprüche 12 -14, **dadurch gekennzeichnet, dass** der Druck im Kompressionsbereich (11) gleich oder größer, insbesondere um 0.1 - 20% als der Druck im Auslaßbereich (17) eingestellt, insbesondere geregelt wird.

16. Füllmaschine nach mindestens einem der Ansprüche 1-11, **dadurch gekennzeichnet, dass** der Drucksensor (41) entweder bündig in der Pumpenwandung (4) des Pumpengehäuses (6) oder insbesondere bündig, im Boden des Pumpengehäuses (6) oder im Deckel integriert ist oder aber über eine Öffnung mit einer Förderkammer (8) im Kompressionsbereich verbunden ist oder
in die Einstelleinrichtung (40), insbesondere im entsprechenden Antrieb (33) einer Einrichtung zum Erzeugen eines Gegendrucks auf eine Feder (47) oder einen Ausgleichskolben, integriert ist.
